# EUROPEAN PATENT APPLICATION

(11) **EP 4 575 718 A1**
(43) Date of publication of application: **25.06.2025**
(21) Application number: 24205396.5
(22) Date of filing: 08.10.2024
(51) Int. Cl.: G06F 1/26, G06F 1/30, H02J 7/00

(54) **INFORMATION PROCESSING APPARATUS AND CONTROL METHOD**

(30) Priority: 20.12.2023 JP 2023215156
(71) Applicant: Lenovo (Singapore) Pte. Ltd., 556741 (SG)
(72) Inventor: Chien, Li Jhan, Yokohama-shi, 220-0012 (JP)
(74) Representative: Openshaw & Co.

(57) **Abstract**

The present invention is to reduce a delay in power supply from a battery in case of power shortage while reducing heat generation. An information processing apparatus includes: a first conversion circuit unit which steps down a power supply voltage to a first voltage when the power supply voltage exceeds a first threshold voltage, and outputs the first voltage to a first power line, or outputs the power supply voltage directly to the first power supply line via a bypass line when the power supply voltage is equal to or less than the first threshold voltage; a second conversion circuit unit which converts the first voltage output to the first power supply line into a second voltage, and outputs the second voltage to a second power supply line, which supplies power to a main control unit and an image processing unit and to which a battery is connected; a switching unit capable of supplying power to a peripheral device by switching between a route from the first power supply line and a route from the second power supply line; and a power supply control unit which controls the switching unit to supply power to the peripheral device from the first power supply line when the power supply voltage is equal to or more than a preset second threshold voltage, or to supply power to the peripheral device from the second power supply line when the power supply voltage is less than the second threshold voltage.

## Description

### BACKGROUND OF THE INVENTION

### Field of the Invention

The present invention relates to an information processing and a control method.

### Description of the Related Art

In recent years, information processing apparatuses such as laptop personal computers (laptop PCs) equipped with USB (Universal Serial Bus) Type-C power supply connectors have been becoming popular (for example, see Japanese Unexamined Patent Application Publication No. 2017-224261) .

### SUMMARY OF THE INVENTION

Incidentally, in the USB Type-C PD (USB Power Delivery) standard, 48-V power supply is newly added, and 48-V power supply by USB is required even in an information processing apparatus.

However, when trying to realize 48-V power supply in a conventional information processing apparatus, for example, by one conversion circuit for battery charging, heat generation becomes a problem because power flows in a concentrated manner when high voltage is applied. Further, when the power supply is distributed among two or more conversion circuits, it becomes difficult to connect directly to a battery. Therefore, in the case of a shortage of power supplied from a power supply connector, there may be a delay when switching from a charging mode to a discharging mode.

The present invention has been made to solve the above problem, and it is an object thereof to provide an information processing apparatus and a control method capable of reducing a delay in power supply from the battery in case of power shortage while reducing heat generation.

In order to solve the above problem, an information processing apparatus according to the first aspect of the present invention includes: a first conversion circuit unit which steps down a power supply voltage supplied from outside through a power supply connector to a first voltage when the power supply voltage exceeds a first threshold voltage, and outputs the first voltage to a first power supply line, or outputs the power supply voltage directly to the first power supply line via a bypass line when the power supply voltage is equal to or less than the first threshold voltage; a second conversion circuit unit which converts the first voltage output to the first power supply line into a second voltage, and outputs the second voltage to a second power supply line, which supplies power to a main control unit and an image processing unit and to which a battery is connected; a switching unit capable of supplying power to a peripheral device by switching between a route from the first power supply line and a route from the second power supply line; and a power supply control unit which controls the switching unit to supply power to the peripheral device from the first power supply line when the power supply voltage is equal to or more than a preset second threshold voltage, or to supply power to the peripheral device from the second power supply line when the power supply voltage is less than the second threshold voltage.

The above information processing apparatus according to the first aspect of the present invention may be such that an embedded controller operating independently of the main control unit is further included, wherein the embedded controller includes the power supply control unit.

The above information processing apparatus according to the first aspect of the present invention may also be such that the power supply control unit is made up of a discrete logic circuit including a comparator circuit which compares the power supply voltage and the second threshold voltage.

The above information processing apparatus according to the first aspect of the present invention may further be such that the switching unit includes a first ideal diode circuit placed between the first power supply line and a third power supply line to supply power to the peripheral device, and a second ideal diode circuit placed between the second power supply line and the third power supply line.

Further, the above information processing apparatus according to the first aspect of the present invention may be such that the power supply connector is a USB Type-C connector.

Further, a control method according to the second aspect of the present invention includes: a first conversion step of causing a first conversion circuit unit to step down a power supply voltage supplied from outside through a power supply connector to a first voltage when the power supply voltage exceeds a first threshold voltage and to output the first voltage to a first power supply line, or to output the power supply voltage directly to the first power supply line via a bypass line when the power supply voltage is equal to or less than the first threshold voltage; a second conversion step of causing a second conversion circuit unit to convert the first voltage output to the first power line into a second voltage, and to output the second voltage to a second power supply line, which supplies power to a main control unit and an image processing unit and to which a battery is connected; and a power supply control step of causing a power supply control unit to control a switching unit, capable of supplying power to a peripheral device by switching between a route from the first power supply line and a route from the second power supply line, to supply power to the peripheral device from the first power supply line when the power supply voltage is equal to or more than a preset second threshold voltage, or to supply power to the peripheral device from the second power supply line when the power supply voltage is less than the second threshold voltage.

The above-aspects of the present invention can reduce a delay in power supply from a battery in case of power shortage while reducing heat generation.

### BRIEF DESCRIPTION OF THE DRAWINGS

FIG. 1 is a diagram illustrating an example of the main hardware configuration of a laptop PC according to a first embodiment.
FIG. 2 is a block diagram illustrating an example of the details of a power supply unit of the laptop PC according to the first embodiment.
FIG. 3 is a first diagram for describing an example of the operation of the laptop PC according to the first embodiment.
FIG. 4 is a second diagram for describing another example of the operation of the laptop PC according to the first embodiment.
FIG. 5 is a flowchart illustrating an example of the operation of the laptop PC according to the first embodiment.
FIG. 6 is a block diagram illustrating an example of the details of a power supply unit of a laptop PC according to a second embodiment.

### DETAILED DESCRIPTION OF THE INVENTION

An information processing apparatus and a control method according to one embodiment of the present invention will be described below with reference to the accompanying drawings.

### (First Embodiment)

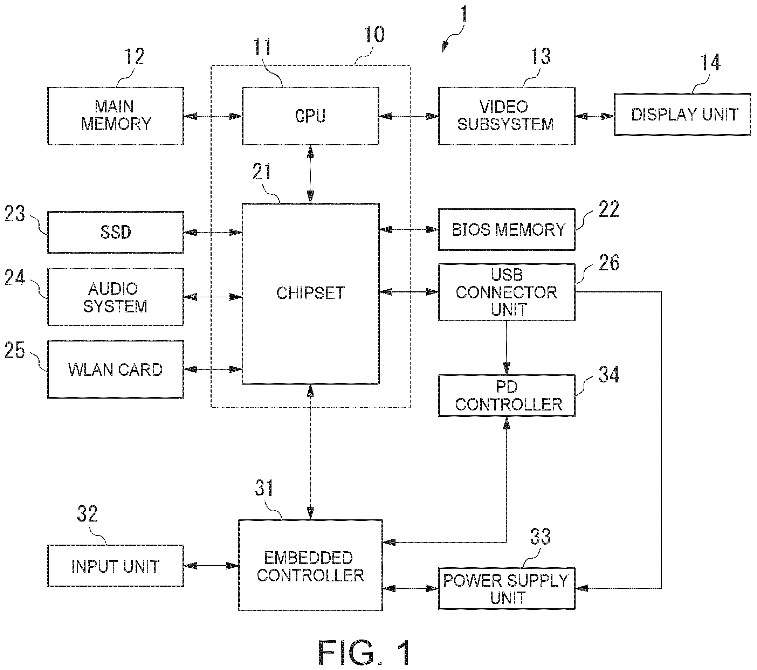

FIG. 1 is a diagram illustrating an example of the main hardware configuration of a laptop PC 1 according to the present embodiment.

As illustrated in FIG. 1, the laptop PC 1 (laptop personal computer) includes a CPU 11, a main memory 12, a video subsystem 13, a display unit 14, a chipset 21, a BIOS memory 22, an SSD 23, an audio system 24, a WLAN card 25, a USB connector unit 26, an embedded controller 31, an input unit 32, a power supply unit 33, and a PD controller 34.

Note that the CPU 11 and the chipset 21 correspond to a main control unit 10 in the present embodiment.

Further, in the present embodiment, the laptop PC 1 will be described as an example of an information processing apparatus.

The CPU (Central Processing Unit) 11 executes various kinds of arithmetic processing by program control to control the entire laptop PC 1.

The main memory 12 is a writable memory used as reading areas of execution programs of the CPU 11 or working areas to which processed data of the execution programs are written. The main memory 12 is composed, for example, of plural DRAM (Dynamic Random Access Memory) chips. The execution programs include a BIOS (Basic Input Output System), an OS (Operating System), various drivers for hardware-operating peripheral devices, various services/utilities, application programs, and the like.

The video subsystem 13 is a subsystem including a GPU (Graphics Processing Unit) and a VRAM (Video Random Access Memory) to realize a function related to image display, which includes a video controller. This video controller processes a drawing command from the CPU 11, writes processed drawing information into a video memory, and reads this drawing information from the video memory to output the drawing information to the display unit 14 as drawing data (display data).

For example, the display unit 14 is a liquid crystal display to display a display screen based on the drawing data (display data) output from the video subsystem 13.

The chipset 21 includes controllers such as a USB (Universal Serial Bus), serial ATA (AT Attachment), an SPI (Serial Peripheral Interface) bus, a PCI (Peripheral Component Interconnect) bus, a PCI-Express bus, and an LPC (Low Pin Count) bus, and plural devices are connected thereto. In FIG. 1, as examples of devices, the BIOS memory 22, the SSD 23, the audio system 24, the WLAN card 25, and the USB connector unit 26 are connected to the chipset 21.

The BIOS memory 22 is configured, for example, by an electrically rewritable nonvolatile memory such as an EEPROM (Electrically Erasable Programmable Read Only Memory) or a flash ROM. The BIOS memory 22 stores system firmware for controlling the BIOS, the embedded controller 31, and the like.

The SSD (Solid State Drive) 23 (an example of a nonvolatile storage device) stores the OS, various drivers, various services/utilities, application programs, and various data.

The audio system 24 is, for example, an audio codec, which records, plays back, and outputs sound data.

The WLAN (Wireless Local Area Network) card 25 is connected to a network through wireless LAN to perform data communication. For example, when receiving data from the network, the WLAN card 25 generates an event trigger indicating that the data is received, which is available to wake up (restore) the laptop PC 1 from a shut-down state.

The USB connector 26 is a connector for connecting peripheral devices using the USB (Universal Serial Bus). In the present embodiment, it is assumed that the laptop PC 1 has both a Type A connector and a Type C connector (USB-C connector) as the USB connector unit 26.

The embedded controller 31 is a one-chip microcomputer which monitors and controls various devices (components such as peripheral devices, sensors, and the like) regardless of the system state of the laptop PC 1. Further, the embedded controller 31 has a power management function to control the power supply unit 33. Note that the embedded controller 31 is composed of a CPU, a ROM (such as a flash ROM), a RAM, and the like, which are not illustrated, and includes multi-channel A/D input terminal and D/A output terminal, a timer, and digital input/output terminals. To the embedded controller 31, for example, the input unit 32, the power supply unit 33, and the like are connected through these input/output terminals. The embedded controller 31 controls the operation of these units. The embedded controller 31 is an embedded controller independent of the main control unit 10 and operable in a state where the power supply to the main control unit 10 is stopped.

The input unit 32 is, for example, an input device including a keyboard, a pointing device, a touch pad, a power switch (boot switch), and the like. For example, the input unit 32 can be returned from the shut-down state (that is, the laptop PC 1 can be rebooted) by pressing the power switch (boot switch).

The power supply unit 33 includes, for example, a DC/DC converter, a charge/discharge unit, a buttery unit (battery), and the like to supply power for operating the laptop PC 1. The power supply unit 33 converts DC voltage supplied from an external AC/DC adapter or the battery into plural voltages required to operate the laptop PC 1. Further, the power supply unit 33 supplies power to each unit of the laptop PC 1 under the control of the embedded controller 31.

The details of the power supply unit 33 in the present embodiment will be described later.

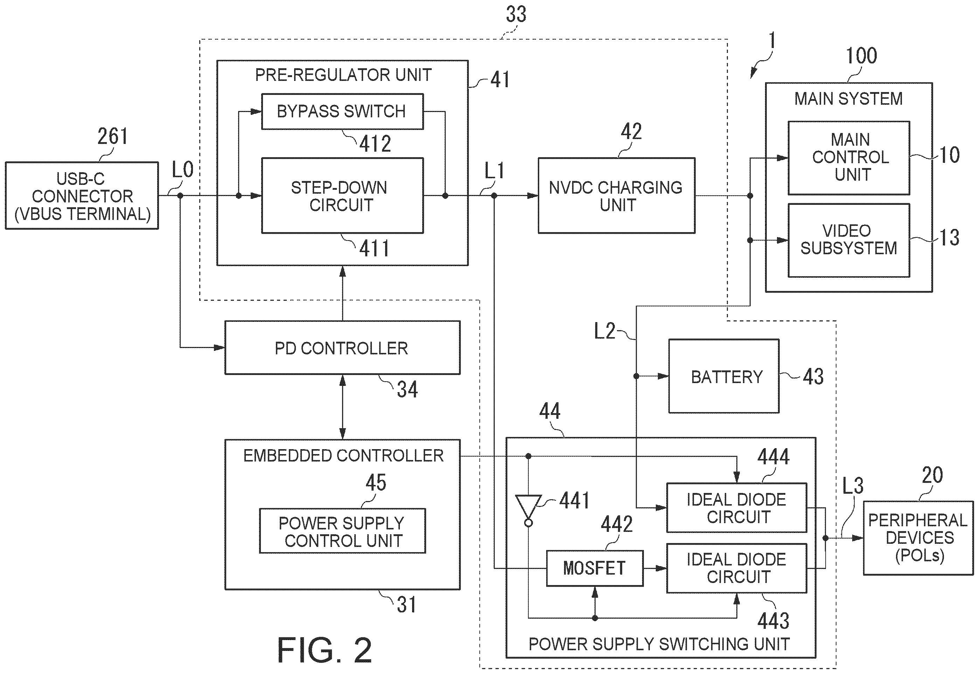

The PD controller 34 performs control corresponding to the USB PD (Power Delivery). The PD controller 34 manages the power supply function to supply power to the laptop PC 1 through a USB VBUS (power supply line) terminal. For example, the PD controller 34 determines whether or not the AC adapter in the powered state is connected to a USB-C connector 261 (see FIG. 2), and determines the type of power supplied to the VBUS terminal (voltage range, current range, allowable power value, and the like).

Referring next to FIG. 2, the details of the power supply unit 33 of the laptop PC 1 according to the present embodiment will be described.

FIG. 2 is a block diagram illustrating an example of the details of the power supply unit 33 of the laptop PC 1 according to the present embodiment.

As illustrated in FIG. 2, the laptop PC 1 includes the USB-C connector 261, the embedded controller 31, the power supply unit 33, the PD controller 34, a main system 100, and peripheral devices 20.

The USB-C connector 261 (an example of a power supply connector) is one of connectors included in the USB connector unit 26 described above, which is a USB-type C connector. An AC adapter (unillustrated) is externally connected to the USB-C connector 261 to supply power supply power to the laptop PC 1 through the VBUS terminal.

The main system 100 includes the main control unit 10 and the video subsystem 13 (image processing unit), which consumes the most power by processing of the laptop PC 1. Note that it is assumed that the main control unit 10 includes the main CPU 11 and the chipset 21, and the video subsystem 13 includes the GPU and the VRAM.

The peripheral devices 20 correspond to peripheral devices that are not included in the main system 100 of the laptop PC 1, which include, for example, the SSD 23, the display unit 14, the audio system 24, the WLAN card 25, and the like. The peripheral devices 20 are POLs, such as memories like the SSD 23 and the like, other than the CPU and the GPU inside the laptop PC 1.

The PD controller 34 negotiates and decides the type of power supply power supplied from the AC adapter connected to the USB-C connector 261. Further, the PD controller 34 detects the voltage (power supply voltage) of power supply line L0 for supplying power supply power from the VBUS terminal of the USB-C connector 261 to control a pre-regulator unit 41 to be described later according to the detected power supply voltage. Further, the PD controller 34 supplies information indicative of the detected power supply voltage to the embedded controller 31.

The power supply unit 33 includes the pre-regulator unit 41, an NVDC charging unit 42, a battery 43, and a power supply switching unit 44.

When the power supply voltage supplied from outside through the USB-C connector 261 (power supply connector) exceeds a threshold voltage (first threshold voltage), the pre-regulator unit 41 (an example of a first conversion circuit unit) steps down the power supply voltage to a first voltage and outputs the first voltage to power supply line L1 (first power supply line), while when the power supply voltage is equal to or less than the threshold voltage (equal to or less than the first threshold voltage), the pre-regulator unit 41 outputs the power supply voltage directly to the power supply line L1 via a bypass line. Note that it is assumed that the power supply line for supplying power supply power (power supply voltage) from the USB-C connector 261 to the pre-regulator unit 41 is the power supply line L0.

Further, for example, the power supply voltage is 5 V (volts) to 48 V, which can supply up to 240 W of power to the USB-C connector 261.

Further, for example, the threshold voltage (the first threshold voltage) is 36 V. When the power supply voltage exceeds 36 V, the pre-regulator unit 41 steps down the power supply voltage to the first voltage (for example, 16 V to 20 V), and outputs the first voltage to the power supply line L1. Further, for example, when the power supply voltage is equal to or less than 36 V, the pre-regulator unit 41 outputs the power supply voltage (for example, 5 V to 36 V) directly to the power supply line L1.

The pre-regulator unit 41 supplies the first voltage (for example, 16 V to 20 V) to the peripheral devices 20 through the power supply switching unit 44 to be described later.

The pre-regulator unit 41 includes a step-down circuit 411 and a bypass switch 412.

For example, the step-down circuit 411 is a buck regulator to step down the power supply voltage (for example, 36 V to 48 V) to the first voltage (for example, 16 V to 20 V) and to output the first voltage to the power supply line L1. Note that when the bypass switch 412 is controlled to on-state (conductive state) by the PD controller 34, the step-down circuit 411 stops operating.

For example, the bypass switch 412 is a MOSFET (Metal-Oxide-Semiconductor Field-Effect Transistor), which establishes the connection between the power supply line L0 and the power supply line L1 to bypass the output of the power supply voltage to the power supply line L1. When the bypass switch 412 is controlled to on-state by the PD controller 34, the bypass switch 412 outputs the power supply voltage (for example, 5 V to 36 V) to the power supply line L1.

For example, the NVDC (Narrow Voltage Direct Charging) charging unit 42 (an example of a second conversion circuit unit) is a power supply circuit for charging the battery 43 in NVDC mode. The NVDC charging unit 42 converts the first voltage (for example, 5 V to 36 V, or 16 V to 20 V) output to the power supply line L1 into a second voltage (for example, 9 V to 13.5 V, or 12 V to 18.2 V), and outputs the second voltage to power supply line L2 (second power supply line), which is a power supply line L2 for supplying power to the main control unit 10 and the video subsystem 13 (image processing unit) and to which the battery 43 is connected.

Note that the power supply line L2 is connected to the main control unit 10 and the video subsystem 13 of the main system 100 and the battery 43, and the second voltage is supplied to the main control unit 10 and the video subsystem 13 via the power supply line L2. Further, charging power is supplied to the battery 43 from the NVDC charging unit 42 via the power supply line L2, and power is supplied from the battery 43 to the main control unit 10 and the video subsystem 13 via the power supply line L2.

Further, the NVDC charging unit 42 supplies the second voltage (for example, 9 V to 13.5 V) to the peripheral devices 20 through the power supply switching unit 44 to be described later.

The battery 43 is a battery unit composed of lithium-ion storage batteries, which is directly connected to the power supply line L2. The battery 43 is charged by the power supplied from the NVDC charging unit 42 through the power supply line L2, and when there is insufficient power to operate the main system 100 and the peripheral devices 20, the battery 43 discharges to supply power to operate the main system 100 and the peripheral devices 20.

The power supply switching unit 44 (an example of a switching unit) can supply power to the peripheral devices 20 by switching between the route from the power supply line L1 and the route from the power supply line L2. The power supply switching unit 44 outputs either of the first voltage of the power supply line L1 and the second voltage of the power supply line L2 to power supply line L3 by switching and connecting from either of the power supply line L1 and the power supply line L2 to the power supply line L3.

The power supply switching unit 44 includes an inverter circuit 441, a MOSFET 442, and ideal diode circuits (443 and 444).

For example, the inverter circuit 441 is a logic inversion circuit which logically inverts and outputs, to a control terminal of the MOSFET 442, a control signal (switching signal) supplied from the embedded controller 31.

The MOSFET 442 is connected between the power supply line L1 and the power supply line L3, and the control terminal (gate terminal) thereof is connected to an output terminal of the inverter circuit 441. When the MOSFET 442 becomes the on-state by the output signal of the inverter circuit 441, the MOSFET 442 outputs the voltage of the power supply line L1 to an anode terminal of the ideal diode circuit 443.

The ideal diode circuit 443 (an example of a first ideal diode circuit) is placed between the power supply line L1 and the power supply line L3 (third power supply line) for supplying power to the peripheral devices 20. The anode terminal of the ideal diode circuit 443 is connected to an output line of the MOSFET 442, and a cathode terminal thereof is connected to the power supply line L3.

The ideal diode circuit 443 is controlled between on-state and off-state by the output of the inverter circuit 441 to prevent a backflow from the power supply line L3. When the MOSFET 442 is in the on-state, the ideal diode circuit 443 becomes the on-state to output the voltage of the power supply line L1 to the power supply line L3.

The ideal diode circuit 444 (an example of a second ideal diode circuit) is placed between the power supply line L2 and the power supply line L3. An anode terminal of the ideal diode circuit 444 is connected to the power supply line L2, and a cathode terminal thereof is connected to the power supply line L3. The ideal diode circuit 444 is controlled between on-state and off-state by the output of the control signal from the embedded controller 31 to prevent a backflow from the power supply line L3. When the MOSFET 442 is in the off-state, the ideal diode circuit 444 becomes the on-state to output the voltage of the power supply line L2 to the power supply line L3.

The embedded controller 31 includes a power supply control unit 45 to output a control signal to perform switching control of the power supply switching unit 44.

When the power supply voltage supplied through the USB-C connector 261 is equal to or more than a preset second threshold voltage (for example, equal to or more than 43 V), the power supply control unit 45 supplies power from the power supply line L1 to the peripheral devices 20, while when the power supply voltage is less than the second threshold voltage (for example, less than 43 V), the power supply control unit 45 controls the power supply switching unit 44 to supply power from the power supply line L2 to the peripheral devices 20.

For example, the power supply control unit 45 acquires a value of the power supply voltage from the PD controller 34. For example, when the acquired value of the power supply voltage is equal to or more than 43 V (for example, 48±4.8 V), the power supply control unit 45 outputs, to the power supply switching unit 44, such a control signal that the MOSFET 442 and the ideal diode circuit 443 of the power supply switching unit 44 becomes the on-state and the ideal diode circuit 444 becomes the off-state. Note that, for example, when the voltage of the power supply line L1 is 16 V to 20 V, the power supply control unit 45 may control the MOSFET 442 and the ideal diode circuit 443 to the on-state, while when the voltage of the power supply line L1 is more than 20 V, the power supply control unit 45 may control the MOSFET 442 and the ideal diode circuit 443 to the off-state.

Further, when the acquired value of the power supply voltage is less than 43 V, the power supply control unit 45 outputs, to the power supply switching unit 44, such a control signal that the MOSFET 442 and the ideal diode circuit 443 of the power supply switching unit 44 become the off-state, and the ideal diode circuit 444 becomes the on-state.

Next, the operation of the laptop PC 1 according to the present embodiment will be described with reference to the accompanying drawings.

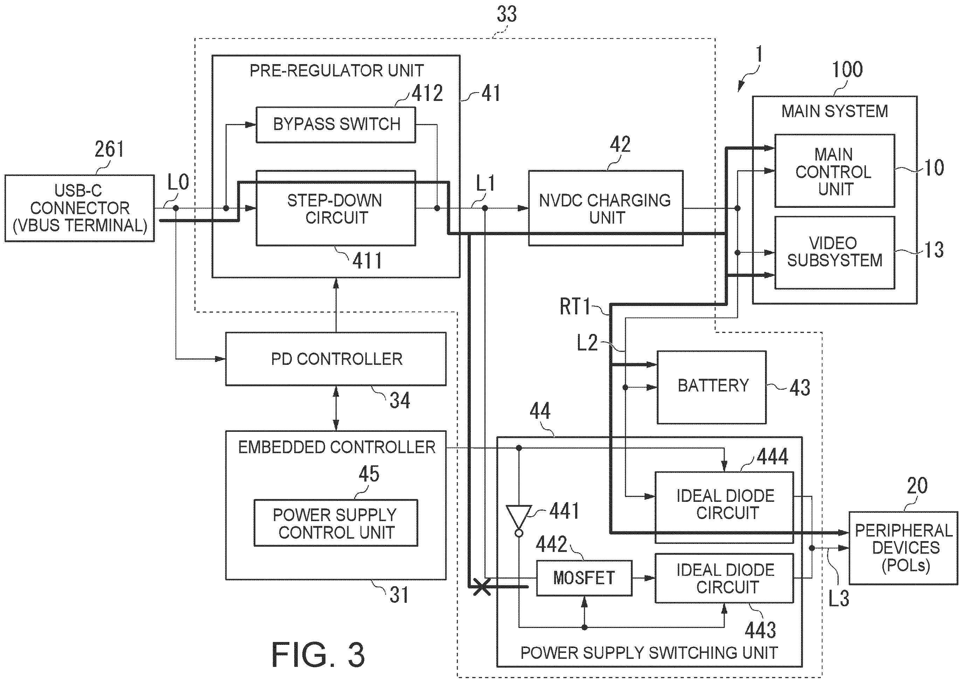

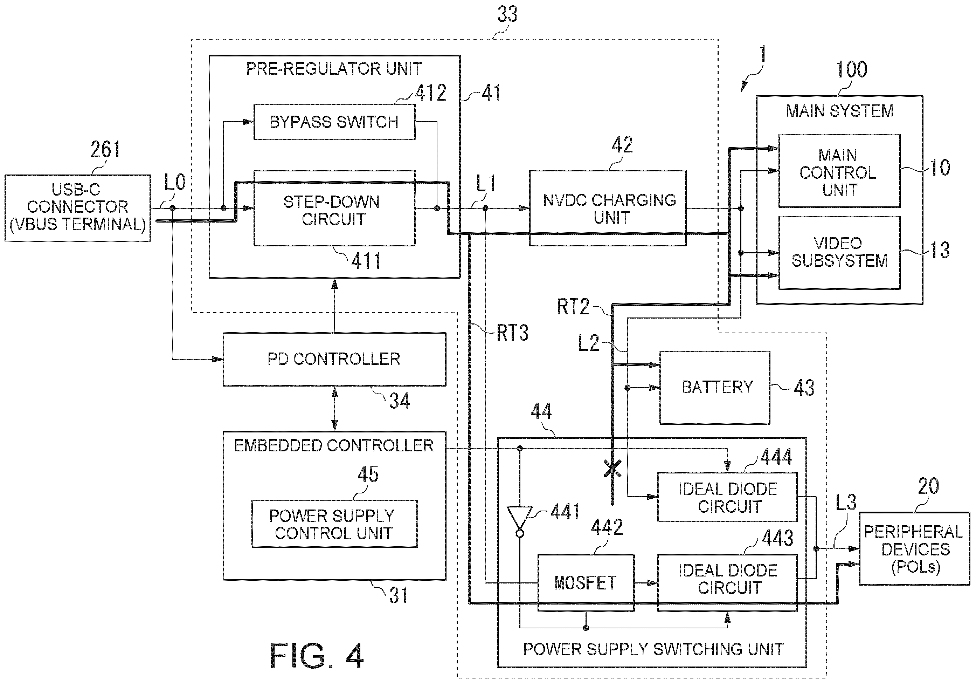

FIG. 3 and FIG. 4 are diagrams for describing examples of the operation of the laptop PC 1 according to the present embodiment.

In FIG. 3, the operation of the laptop PC 1 when 48 V is not supplied to the power supply voltage (when the power supply voltage is about less than 43 V) will be described.

In this case, as illustrated in FIG. 3, the power supply control unit 45 outputs, to the power supply switching unit 44, such a control signal that the MOSFET 442 and the ideal diode circuit 443 of the power supply switching unit 44 become the off-state and the ideal diode circuit 444 becomes the on-state. Therefore, the power supply voltage supplied through the USB-C connector 261 supplies power to the peripheral devices 20 through route RT1 of the pre-regulator unit 41 → the power supply line L1 → the NVDC charging unit 42 → the power supply line L2 , the ideal diode circuit 444 of the power supply switching unit 44 → the power supply line L3. Further, like in the case of the peripheral devices 20, power is also supplied to the main system 100 and the battery 43 from the power supply line L2.

Further, in FIG. 4, the operation of the laptop PC 1 when 48 V is supplied to the power supply voltage (for example, when the power supply voltage is 48±4.8 V) will be described.

In this case, as illustrated in FIG. 4, the power supply control unit 45 outputs, to the power supply switching unit 44, such a control signal that the MOSFET 442 and the ideal diode circuit 443 of the power supply switching unit 44 become the on-state and the ideal diode circuit 444 becomes the off-state. Therefore, the power supply voltage supplied through the USB-C connector 261 supplies power to the peripheral devices 20 through route RT3 of the pre-regulator unit 41 → the power supply line L1 → the MOSFET 442 and the ideal diode circuit 443 of the power supply switching unit 44 → the power supply line L3. Further, power is supplied to the main system 100 and the battery 43 through route RT2 of the pre-regulator unit 41 → the power supply line L1 → the NVDC charging unit 42 → the power supply line L2.

In this case, the power supply power supplied through the USB-C connector 261 is consumed by being distributed between the route RT2 and the route RT3.

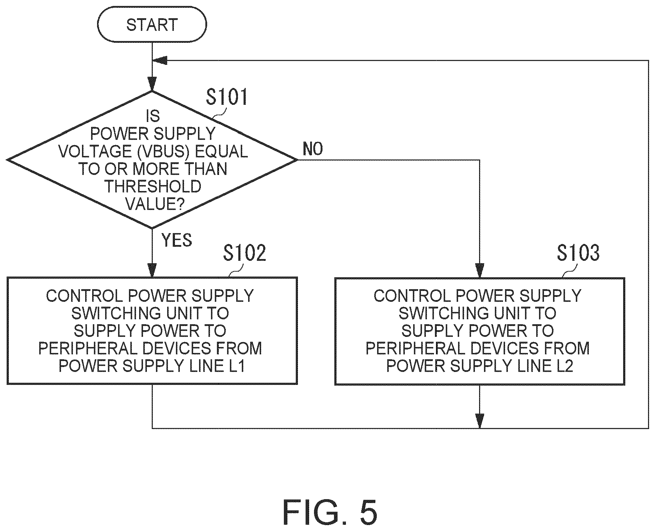

Referring next to FIG. 5, the details of the operation of the power supply control unit 45 of the laptop PC 1 according to the present embodiment will be described.

FIG. 5 is a flowchart illustrating an example of the operation of the laptop PC according to the present invention.

As illustrated in FIG. 5, the power supply control unit 45 first determines whether or not the power supply voltage (VBUS) is equal to or more than a threshold voltage (equal to or more than the second threshold voltage) (step S101). The power supply control unit 45 acquires the value of the power supply voltage from the PD controller 34 and determines whether or not the power supply voltage is equal to or more than 43 V (equal to or more than the second threshold voltage, that is, equal to or more than about 48-4.8 V). When the power supply voltage is equal to or more than 43 V (equal to or more than the second threshold voltage, that is, equal to or more than about 48-4.8 V) (step S101: YES), the power supply control unit 45 proceeds to a process in step S102. On the other hand, when the power supply voltage is less than 43 V (less than the second threshold voltage, that is, less than about 48-4.8 V) (step S101: NO), the power supply control unit 45 proceeds to a process in step S103.

In step S102, the power supply control unit 45 controls the power supply switching unit 44 to supply power to the peripheral devices 20 from the power supply line L1. In other words, the power supply control unit 45 switches from the state of the route RT1 to the state of the route RT2 and the route RT3 as described above to control the power supply switching unit 44 to the state illustrated in FIG. 4. After the process in step S102, the power supply control unit 45 returns to the process in step S101.

Further, in step S103, the power supply control unit 45 controls the power supply switching unit 44 to supply power to the peripheral devices 20 from the power supply line L2. In other words, the power supply control unit 45 switches from the state of the route RT2 and the route RT3 to the state of the route RT1 as described above to control the power supply switching unit 44 to the state illustrated in FIG. 3. After the process in step S103, the power supply control unit 45 returns to the process in step S101.

As described above, the laptop PC 1 (information processing apparatus) according to the present embodiment includes the pre-regulator unit 41 (first conversion circuit unit), the NVDC charging unit 42 (second conversion circuit unit), the power supply switching unit 44 (switching unit), and the power supply control unit 45. When the power supply voltage supplied from outside through the USB-C connector 261 (power supply connector) exceeds the first threshold voltage (for example, 36 V), the pre-regulator unit 41 steps down the power supply voltage to a first voltage (for example, 16 V to 20 V) and outputs the first voltage to the power supply line L1 (first power supply line), while when the power supply voltage is equal to or less than the first threshold voltage (for example, equal to or less than 36 V), the pre-regulator unit 41 outputs the power supply voltage directly to the power supply line L1 via the bypass line. The NVDC charging unit 42 converts the first voltage output to the power supply line L1 into a second voltage (for example, 9 V to 13.5 V, or 12 V to 18.2 V), and outputs the second voltage to the power supply line L2 (second power supply line), which supplies power to the main control unit 10 and the video subsystem 13 (image processing unit) and to which the battery is connected. The power supply switching unit 44 (switching unit) can supply power to the peripheral devices 20 by switching between the route from the power supply line L1 and the route from the power supply line L2. The power supply control unit 45 controls the power supply switching unit 44 to supply power to the peripheral devices 20 from the power supply line L1 when the power supply voltage is equal to or more than a preset second threshold voltage (for example, equal to or more than 43 V), or to supply power to the peripheral devices 20 from the power supply line L2 when the power supply voltage is less than the second threshold voltage (for example, less than 43 V).

Thus, for example, when supplying 48-V power, the laptop PC 1 (information processing apparatus) according to the present embodiment supplies power by being distributed between the route RT2 (power supply to the main control unit 10 and the video subsystem 13) and the route RT3 (power supply to the peripheral devices 20) as in the state illustrated in FIG. 4 described above. Therefore, the laptop PC 1 according to the present embodiment can reduce heat generation by 48-V power supply. Further, in the laptop PC 1 according to the present embodiment, since the battery 43 is connected directly to the power supply line L2, power can be replenished from the battery 43 quickly without any delay even in case of power shortage due to the operation of the main control unit 10 and the video subsystem 13. Therefore, for example, in the 48-V power supply, the laptop PC 1 according to the present embodiment can reduce a delay in power supply from the battery 43 in case of power shortage (a delay when switching from a charging mode to a discharging mode) while reducing heat generation.

Further, the laptop PC 1 according to the present embodiment includes the embedded controller 31 that operates independently of the main control unit 10. The embedded controller 31 includes the power supply control unit 45 described above.

Thus, since the laptop PC 1 according to the present embodiment configures the power supply control unit 45 using the embedded controller 31, there is no need to newly add the power supply control unit 45. Therefore, the laptop PC 1 according to the present embodiment can realize 48-V power supply easily using the conventional embedded controller 31.

Further, in the present embodiment, the power supply switching unit 44 includes the ideal diode circuit 443 (first ideal diode circuit) and the ideal diode circuit 444 (second ideal diode circuit). The ideal diode circuit 443 is placed between the power supply line L1 (first power supply line) and the power supply line L3 (third power supply line) for supplying power to the peripheral devices 20. The ideal diode circuit 444 is placed between the power supply line L2 (second power supply line) and the power supply line L3 (third power supply line).

Thus, the laptop PC 1 according to the present embodiment can switch between the power supply line L1 (first power supply line) and the power supply line L2 (second power supply line) using the ideal diode circuit 443 and the ideal diode circuit 444 without any unnecessary voltage drop (reduction). Further, the laptop PC 1 according to the present embodiment can prevent a backflow of power to be supplied to the peripheral devices 20 by using the ideal diode circuit 443 and the ideal diode circuit 444.

Further, in the present embodiment, the USB connector unit 26 is a USB Type-C connector (the USB-C connector 261).

Thus, the laptop PC 1 (information processing apparatus) according to the present embodiment can realize 48-V power supply using the USB connector (USB-C connector 261) .

Further, a control method according to the present embodiment includes a first conversion step, a second conversion step, and a power supply control step. In the first conversion step, when the power supply voltage supplied from outside through the USB connector unit 26 exceeds the first threshold voltage, the pre-regulator unit 41 steps down the power supply voltage to the first voltage and outputs the first voltage to the power supply line L1, while when the power supply voltage is equal to or less than the first threshold voltage, the pre-regulator unit 41 outputs the power supply voltage directly to the power supply line L1 via the bypass line. In the second conversion step, the NVDC charging unit 42 converts the first voltage output to the power supply line L1 into the second voltage, and outputs the second voltage to the power supply line L2, which supplies power to the main control unit 10 and the video subsystem 13 and to which the battery is connected. In the power supply control step, the power supply control unit 45 (the embedded controller 31) controls the power supply switching unit 44, capable of supplying power to the peripheral devices 20 by switching between the route from the power supply line L1 and the route from the power supply line L2, to supply power to the peripheral devices 20 from the power supply line L1 when the power supply voltage is equal to or more than a preset second threshold voltage, or to supply power to the peripheral devices 20 to the peripheral devices 20 from the power supply line L2 when the power supply voltage is less than the second threshold voltage.

Thus, the control method according to the present embodiment has the same effect as the laptop PC 1 described above. For example, in the 48-V power supply, the control method according to the present embodiment can reduce a delay in power supply from the battery 43 in case of power shortage (a delay when switching from a charging mode to a discharging mode) while reducing heat generation.

### (Second Embodiment)

Next, a laptop PC 1a according to a second embodiment will be described with reference to the accompanying drawings.

In the second embodiment, a modification in which the power supply control unit 45 of the first embodiment is provided outside of the embedded controller 31 will be described.

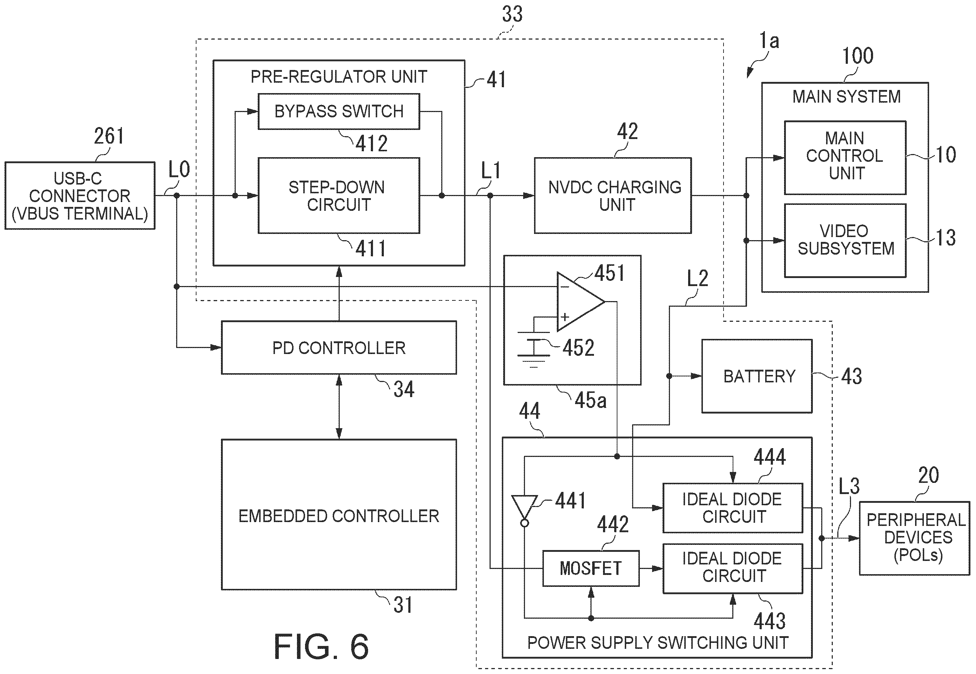

FIG. 6 is a block diagram illustrating an example of the details of the power supply unit 33 of the laptop PC 1a according to the second embodiment.

Note that, since the hardware configuration of the laptop PC 1a according to the present embodiment is the same as that of the first embodiment illustrated in FIG. 1 described above, the description thereof will be omitted here.

Further, the same components as those illustrated in FIG. 2 described above are given the same reference numerals in FIG. 6, and the description thereof will be omitted.

As illustrated in FIG. 6, the laptop PC 1a includes the USB-C connector 261, the embedded controller 31, the power supply unit 33, the PD controller 34, the main system 100, and the peripheral devices 20. Further, the power supply unit 33 in the present embodiment includes the pre-regulator unit 41, the NVDC charging unit 42, the battery 43, the power supply switching unit 44, and a power supply control unit 45a.

Note that the present embodiment is different from the first embodiment in that the power supply control unit 45a is provided outside of the embedded controller 31 without providing the power supply control unit 45 in the embedded controller 31.

The power supply control unit 45a has the same function as the power supply control unit 45 to control the power supply switching unit 44 to supply power to the peripheral devices 20 from the power supply line L1 when the power supply voltage is equal to or more than the preset second threshold voltage (for example, equal to or more than 43 V), or to supply power to the peripheral devices 20 from the power supply line L2 when the power supply voltage is less than the second threshold voltage (for example, less than 43 V).

Further, the power supply control unit 45a includes a comparator 451 and a constant voltage power supply 452.

For example, the comparator 451 is a comparator as a discrete part, where a plus input terminal (non-inverting input terminal) is connected to an output line of the constant voltage power supply 452, a minus input terminal is connected to the VBUS terminal of the USB-C connector 261, and an output terminal is connected to the control signal line. The comparator 451 compares the voltage (for example, the second threshold voltage) of the constant voltage power supply 452 with the power supply voltage, and outputs the comparison result as a control signal to the power supply switching unit 44.

When the power supply voltage is equal to or more than the voltage of the constant voltage power supply 452 (for example, equal to or more than the second threshold voltage), the comparator 451 outputs, to the power supply switching unit 44, such a control signal that the MOSFET 442 and the ideal diode circuit 443 of the power supply switching unit 44 becomes the on-state and the ideal diode circuit 444 becomes the off-state.

Further, when the power supply voltage is less than the voltage of the constant voltage power supply 452 (for example, less than the second threshold voltage), the comparator 451 outputs, to the power supply switching unit 44, such a control signal that the MOSFET 442 and the ideal diode circuit 443 of the power supply switching unit 44 becomes the off-state and the ideal diode circuit 444 becomes the on-state.

The constant voltage power supply 452 is a constant voltage generation circuit to generate a second threshold voltage for comparison. The output line of the constant voltage power supply 452 is connected to the plus input terminal of the comparator 451.

As described above, in the present embodiment, the power supply control unit 45a includes a comparator circuit (the comparator 451) to compare the power supply voltage and the second threshold voltage. The power supply control unit 45a is made up of a discrete logic circuit.

Thus, the laptop PC 1a according to the present embodiment can realize 48-V power supply easily using a simple logic circuit made up of the discrete logic circuit.

Note that the present invention is not limited to the respective embodiments mentioned above, and changes are possible without departing from the scope of the present invention.

For example, in each of the embodiments mentioned above, the example in which the information processing apparatus is the laptop PC 1 (1a) is described, but the present invention is not limited to this example. For example, the information processing apparatus may also be any other information processing apparatus such as a tablet terminal, a desktop PC, or the like.

Further, in each of the embodiments mentioned above, the example in which the power supply connector is the USB-C connector 261 is described, but the present invention is not limited to this example, and the power supply connector may also be a connector for any other interface to supply high power as power supply power.

Further, in each of the embodiments mentioned above, the example in which the first threshold voltage and the second threshold voltage are different threshold voltages is described, but the present invention is not limited to this example, and the first threshold voltage and the second threshold voltage may be different voltage values.

Further, in the first embodiment mentioned above, the example in which the embedded controller 31 includes the power supply control unit 45 is described, but the present invention is not limited to this example. For example, the configuration may be such that the PD controller 34 includes the power supply control unit 45.

Note that each component included in the laptop PC 1 (1a) described above has a computer system therein. Then, a program for implementing the function of each component included in the laptop PC 1 (1a) described above may be recorded on a computer-readable recording medium so that the program recorded on this recording medium is read into the computer system and executed to perform processing in each component included in the laptop PC 1 (1a) described above. Here, the fact that "the program recorded on the recording medium is read into the computer system and executed" includes installing the program on the computer system. It is assumed that the "computer system" here includes the OS and hardware such as peripheral devices and the like.

Further, the "computer system" may include plural computers connected through networks including the Internet, WAN, LAN, and a communication line such as a dedicated line. Further, the "computer-readable recording medium" means a storage medium such as a flexible disk, a magneto-optical disk, a portable medium such as a flash ROM or a CD-ROM, or a hard disk incorporated in the computer system. Thus, the recording medium with the program stored thereon may be a non-transitory recording medium such as the CD-ROM.

Further, a recording medium internally or externally provided to be accessible from a delivery server for delivering the program is included as the recording medium. Note that the program may be divided into plural pieces, downloaded at different timings, respectively, and then united in each component included in the laptop PC 1 (1a), or delivery servers for delivering respective divided pieces of the program may be different from one another.

Further, it is assumed that the "computer-readable recording medium" includes a medium on which the program is held for a given length of time, such as a volatile memory (RAM) inside a computer system as a server or a client when the program is transmitted through a network. The above-mentioned program may also be to implement some of the functions described above. Further, the program may be a so-called differential file (differential program) capable of implementing the above-described functions in combination with a program(s) already recorded in the computer system.

Further, some or all of the functions described above may be realized as an integrated circuit such as LSI (Large Scale Integration). Each function described above may be implemented by a processor individually, or some or all of the functions may be integrated as a processor. Further, the method of circuit integration is not limited to LSI, and it may be realized by a dedicated circuit or a general-purpose processor. Further, if integrated circuit technology replacing the LSI appears with the progress of semiconductor technology, an integrated circuit according to the technology may be used.

### Description of Symbols

- 1, 1a: laptop PC
- 10: main control unit
- 11: CPU
- 12: main memory
- 13: video subsystem
- 14: display unit
- 20: peripheral device
- 21: chipset
- 22: BIOS memory
- 23: SSD
- 24: audio system
- 25: WLAN card
- 26: USB connector unit
- 31: embedded controller (EC)
- 32: input unit
- 33: power supply unit
- 34: PD controller
- 41: pre-regulator unit
- 42: NVDC charging unit
- 43: battery
- 44: power supply switching unit
- 45, 45a: power supply control unit
- 100: main system
- 411: step-down circuit
- 412: bypass switch
- 441: inverter circuit
- 442: MOSFET
- 443, 444: ideal diode circuit
- 451: comparator
- 452: constant voltage power supply

## Claims

1. An information processing apparatus comprising:
a first conversion circuit unit arranged to step down a power supply voltage supplied from outside through a power supply connector to a first voltage when the power supply voltage exceeds a first threshold voltage, and output the first voltage to a first power supply line, or output the power supply voltage directly to the first power supply line via a bypass line when the power supply voltage is equal to or less than the first threshold voltage;
a second conversion circuit unit arranged to convert the first voltage output to the first power supply line into a second voltage, and output the second voltage to a second power supply line, which supplies power to a main control unit and an image processing unit and to which a battery is connected;
a switching unit capable of supplying power to a peripheral device by switching between a route from the first power supply line and a route from the second power supply line; and
a power supply control unit arranged to control the switching unit to supply power to the peripheral device from the first power supply line when the power supply voltage is equal to or more than a preset second threshold voltage, or to supply power to the peripheral device from the second power supply line when the power supply voltage is less than the second threshold voltage.

2. The information processing apparatus according to claim 1, further comprising an embedded controller arranged to operate independently of the main control unit,
wherein the embedded controller includes the power supply control unit.

3. The information processing apparatus according to claim 1, wherein the power supply control unit comprises a discrete logic circuit including a comparator circuit arranged to compare the power supply voltage and the second threshold voltage.

4. The information processing apparatus according to claim 1, wherein the switching unit includes:
a first ideal diode circuit placed between the first power supply line and a third power supply line to supply power to the peripheral device; and
a second ideal diode circuit placed between the second power supply line and the third power supply line.

5. The information processing apparatus according to any one of claims 1 to 4, wherein the power supply connector is a USB Type-C connector.

6. A control method comprising:
a first conversion step of causing a first conversion circuit unit to step down a power supply voltage supplied from outside through a power supply connector to a first voltage when the power supply voltage exceeds a first threshold voltage and to output the first voltage to a first power supply line, or to output the power supply voltage directly to the first power supply line via a bypass line when the power supply voltage is equal to or less than the first threshold voltage;
a second conversion step of causing a second conversion circuit unit to convert the first voltage output to the first power line into a second voltage, and to output the second voltage to a second power supply line, which supplies power to a main control unit and an image processing unit and to which a battery is connected; and
a power supply control step of causing a power supply control unit to control a switching unit, capable of supplying power to a peripheral device by switching between a route from the first power supply line and a route from the second power supply line, to supply power to the peripheral device from the first power supply line when the power supply voltage is equal to or more than a preset second threshold voltage, or to supply power to the peripheral device from the second power supply line when the power supply voltage is less than the second threshold voltage.
